# EUROPEAN PATENT APPLICATION

(11) **EP 2 210 774 A2**
(43) Date of publication of application: **28.07.2010**
(21) Application number: 09164913.7
(22) Date of filing: 08.07.2009
(51) Int. Cl.: B60P 7/08

(54) **Hand-winder assisting rope clamping structure**

(30) Priority: 22.01.2009 TW 98201326 U
(71) Applicant: Ting, San-Lang, Changhua County (TW); Chang, Chun-Hui, Xihu Village Puyan Shiang, Changhua County (TW); Ting, Wei-Lun, Puyan Shiang, Changhua County (TW); Ting, Wei-Yuan, Puyan Shiang, Changhua County (TW)
(72) Inventor: Ting, San-Lang, Puyan Shiang, Changhua County (TW)
(74) Representative: Lang, Christian

(57) **Abstract**

This invention reveals a hand-winder assisting rope clamping structure, particularly suitable for the cargo fastening operation using a rope. The design connects the hand-winder to a clamping device comprising a fixed plate and a movable plate. The clamp holds the movable end of the rope for fastening the cargo. Adjustment of the clamping of the rope is through packing bolts or quick release puller using the hook installed on the truck, and operating the pull handle of the hand-winder to retrieve the flat belt results in tightening of the rope at the same time. After the rope is tied to the truck it is thrown over to the other side of the cargo, the hand-winder is then moved to the other side for repeating of above actions. The whole process thus requires just a set of hand-winder for achieving the advantages in cost, safety, truckload, and storage.

## Description

### BACKGROUND OF THE INVENTION

### (1) Field of the Invention

This invention is related to a hand-winder assisting rope clamping structure for use in cargo transportation operation.

### (2) Description of the Prior Art:

Presently traditional cargo transportation operations in general are mostly made through the operation of fastening cargo piling on the truck using ropes and tighten cargo on the hook rods installed on both sides of the frame of the truck. However, to accomplish the operation of fastening cargo, tremendous labor effort has to be made to complete the cargo fastening work. Sometimes, under the situation when the fastening operation is not correct, the cargo might be scattered around and damaged, resulting indirectly in safety problem of worker's injury at work.

Therefore, to ensure the tightness of fastened cargo and reduce the problem of work injury while at the same time provide a strength-saving and practical cargo fastening tool, the industry has developed a product called hand-winder, as illustrated in Taiwan's patent No. 325845. The structural design of such product mainly consists of a main body and a pulling handle pivoted axially to a hub with a pair of ratchets fixed on the hub to carry together during rotation. A sprawling is used to restrain the ratchet for unidirectional rotation. A flat belt is further wound on the hub so that the hub undergoes unidirectional rotation together with the winding of the flat belt through the up and down pulling control action of the pull handle. The flat belt therefore gradually tightens the cargo in order to achieve the purpose of fastening cargo, and the implementing operation is easier and saving effort.

However, though such hand-winder could improve the labor expense and achieve the result of saving effort in operation as well as reducing the danger in operational safety of fastening operation and increase the convenience, there are also other inconvenience and drawbacks brought with it. The major drawbacks are:

1. A flat belt is required to match with a set of hand-winder for the operation. Therefore, the longer the load on the truck the more hand-winders are needed to prepare. The cost of installing hand-winder which the transport business requires to purchase is also relatively increased, which is not really cost effective.

2. Each hand-winder after fastening cargo has to be placed on the fastened cargo and is taken down only after unloading cargo. Therefore, both sides of the truck are hung with arrays of hand-winders. This does not only increase the weight of the truck but also might severely affect traffic safety if the hand-winders drop off due to mechanical failure.

3. Each of the arrays of hand-winders must be kept away after unloading cargo. Therefore, this creates a storage problem if more hand-winders are used, resulting in more trouble and inconvenience and causing severe wastage in work hour.

From the analysis described above, we know that the drawback of such hand-winder is mainly in the hand-winder which cannot be removed freely after completion of fastening cargo but has to remain on the cargo. Indeed, this has the pressing need for improvement.

### SUMMARY OF THE INVENTION

The main purpose of this invention is to provide a tool for assisting the clamping of rope during the process of tightening cargo and further to achieve the purpose of stretching the rope through the operation of hand-winder in order to resolve the problem of effort spending and safety problem resulted from the traditional pulling labor.

The other purpose of this invention is in the composite design of the structure so that the tightening operation of the cargo could assist the fastening of rope before taken down for subsequent fastening operation until the last before left on the vehicle. In this way, the number of hand-winders used is drastically reduced and there are no subsequent problems of belt retrieving and cost of purchasing.

To realize the purposes stated above, this invention adopts the following technical solutions:

A hand-winder assisting rope clamping structure mainly consists of a hand-winder for controlling the winding of flat belt and a clamping device connected to one end of the hand-winder. The clamping device is for clamping tightly the free end of a rope that holds cargo tightly, and further to attach the hand-winder on the rope in order to accommodate the hand-winder hooked on the side of the cargo frame of the truck so that during the process of retrieving flat belt the hand-winder is used to undergo stretching function for the rope fastening cargo.

A hand-winder assisting rope clamping structure mainly consists of a hand-winder and a clamping device, wherein the hand-winder is formed by combining a main body and a pivoted pull bar, and at both sides of the hub a pair of ratchets are installed; at the top section of the hatchet a sprawling element is installed with the corresponding ratchet, wherein the sprawling element is installed on the main body. The sprawling element is used to restrain the ratchet and hub to undergo unidirectional rotation. A flat belt is wound through the hub, wherein the end of the flat belt is connected with a hook; the hook is connected to the other end of the flat belt relative to the main body and is wound through the hub; the clamping device is consisting of a fixed plate and a movable plate, and a clamping section is installed between the two plates; the inner edge of the clamping section is installed with a gripping structure for tightly clamping the cargo fastening rope.

Therefore, using the clamping device held at the movable end of the rope fastening cargo and accompanying the flat belt hook of the hand-winder installed on the frame of the truck, when operating the pulling handle of the hand-winder to retrieve the flat belt the pulling control action could also be formed on the rope. After the rope is tied to the hook rod of the cargo frame and thrown over to the other side of the cargo, the clamping device is released and the hand-winder is moved to the other side to repeat the above stated action, and further during the process of using the rope fastening the cargo it is possible to rely on the hand-winder and the assistance of the clamping device to achieve the pulling operation of the rope.

The clamping device stated above is fixed to one end of the main body of the hand-winder.

The clamping device stated above is the V-shape connector connected to one end of the rope wound through the hub of the hand-winder that is hooked to the hand-winder.

The clamping device stated above is connected to the hand-winder through the flat belt connecting to one end of the hand-winder main body.

The clamping device stated above is consisted of a fixed plate and a movable plate pivot installed on a single side of the hub, wherein both ends of the fixed plate and the movable plate is installed with a packing bolt, respectively, and the packing bolts are interlocked so that the clamping device could sustain the rope in tight fastening state.

The clamping device stated above is consisted of a fixed plate and a movable plate pivot installed on one side of the hub, wherein both sides of the fixed plate and movable plate are installed with packing bolts and quick release puller, respectively and the tight holding state of the clamping device to the rope is maintained through the quick release puller on the open end.

The clamping device stated above is consisted of a fixed plate and a movable plate pivoted on a single side of the hub, wherein between the movable plate and the hub a bolt is installed with a spring, and through the spring installed between the two the automatic expanding effect for the spring is provided.

The clamping device is a pair of clamping pliers.

A hand-winder assisting rope clamping structure mainly consists of a hand-winder and a clamping device integrated on the hand-winder. The hand-winder consists of a main body and a pivoted pulling handle. A pair of ratchets is inserted on both sides of the hub, wherein the upper section of the ratchets are installed with corresponding sprawling elements. The sprawling elements are installed on the main body, and the ratchets and the hub are constrained to undergo unidirectional rotation through the sprawling elements.

A rope wound through the hub and the other end of the main body is extendedly restrained with a hook; the clamping device is connected to the end of the rope wound through the hub of the hand-winder so that the rope is pulled when the hand-winder is winding the rope. The clamping device is consisted of a fixed plate and a movable plate, and between the two a holding section is installed respectively. The inner edge is installed with a gripping structure for tightening the cargo fastening rope.

Therefore, using the clamping device for tightening the movable end of the rope which holds the fastened cargo together with the hook extendedly installed on the main body of the hand-winder hooked to the frame of the truck so that when operating the pulling handle of the hand-winder to roll back the rope the clamping device will pull the rope directly to form restraining action. After the rope is tied to the hook bar of the frame of the truck and throw to the other side of the cargo the clamping device is loosen the take down to the other side for repeating the above stated action and further during the process of fastening cargo with rope the hand-winder and clamping device are used to assist the pulling and fastening operation of the rope.

The clamping device stated above is connected to the V-shape connector on one end of the rope wound through the hub of the hand-winder and connects to the hook installed on the hand-winder.

The clamping deice stated above is installed using single side hub pivot axis through fixed plate and movable plate. The clamping device maintains the fastening and holding state of the rope through interlocking of packing bolt.

The clamping deice stated above is installed using a single side hub pivot axis through the fixed plate and movable plate. The clamping device maintains the fastening and holding state of the rope through the quick release puller at the expanding end.

The clamping deice stated above is installed using a single side hub pivot connecting axis bolt through the fixed plate and movable plate, and the spring slotted between the two is for realizing automatic expansion in order to facilitate the clamping and holding of the rope.

The clamping device is a pair of clamping pliers.

During application, the movable end of the rope for holding the fastened cargo to the truck hooks the flat belt of the hand-winder on the frame of the truck, through adjusting the fixed plate of the clamping device to the rope, hooks the flat belt of the hand-winder to the frame of the truck and operates the pulling handle of the hand-winder to rewind the flat belt while at the same time forming a restraining action to the rope. After the rope is tied to the hook of the truck's frame and thrown to the other side of the cargo the clamping device is released and taken down and moved to the other side for repeating the above stated action, so that during the process of using the rope to fasten the cargo the hand-winder of this invention is used to assist the rope fastening clamping device in order to achieve the pulling and tightening operation, effectively relieve the effort of pulling derived using traditional human labor and the safety problem and the whole fastening process is accomplished with just a single set of hand-winder, resolving the cost problem encountered in using multiple sets of traditional hand-winders and subsequent trouble and inconvenience. This is indeed suitable for use in the industry and with practical value.

The beneficial result of the present invention is that a clamping device is installed on one end of the hand-winder during the cargo fastening process which could drastically reduce the quantity of used hand-winders and therefore achieving the reduction of cost, increase the safety, lower truck load, and ease in storage.

### BRIEF DESCRIPTION OF THE DRAWINGS

Fig. 1 is the structural illustration of the preferred embodiment of the present invention.

Fig. 2A and Fig. 2B are the structural relationship illustrations during operation for the preferred embodiment of the present invention.

Fig. 3A through Fig. 3C are the operational illustration of the preferred embodiment of the present invention.

Fig. 4 is the reference diagram of the state of implementation for the preferred embodiment of the present invention.

Fig. 5 is the structural illustration of a different type of a clamping device for the preferred embodiment of the present invention.

Fig 6 is the structural illustration of the preferred embodiment of the present invention with a type of a clamping device.

Fig 7 is the structural illustration of the preferred embodiment of the present invention with another type of a clamping device.

Fig 8 is the structural illustration of the preferred embodiment of the present invention with yet another type of a clamping device.

Fig 9 is the structural illustration of the preferred embodiment of the present invention with still another type of a clamping device.

Fig 10 is once again the structural illustration of the preferred embodiment of the present invention with another type of the clamping device.

Fig 11 is the structural illustration of another preferred embodiment of the present invention.

Fig 12A and Fig. 12B are the structural illustrations of the operation for another preferred embodiment of the present invention.

Fig 13 is the structural illustration of another preferred embodiment of the present invention with a different type of a clamping device.

Fig 14 is the structural illustration of another preferred embodiment of the present invention with another type of a clamping device.

Fig 15 is the structural illustration of yet another preferred embodiment of the present invention with different type of a clamping device.

Fig 16 is the structural illustration of yet another preferred embodiment of the present invention with another type of a clamping device.

Fig 17 is the structural illustration of yet another preferred embodiment of the present invention with yet another type of a clamping device.

Fig 18 is the structural illustration of yet another preferred embodiment of the present invention with still another type of a clamping device.

Fig 19 is the structural illustration of the preferred embodiment of the present invention with another type of a clamping device.

### DESCRIPTION OF MAIN COMPONENT SYMBOLS

- 1 :: rope
- 2 :: hook bar
- 10 :: hand-winder
- 11 :: main body
- 12 :: pulling handle
- 13 :: hub
- 14 :: ratchet
- 15 :: sprawling element
- 16 :: flat belt
- 17 :: hook
- 18 :: ring
- 181 :: packing bolt
- 19 :: rope
- 20 :: clamping device
- 21 :: fixed plate
- 22 :: movable plate
- 23 :: holding section
- 24 :: packing bolt
- 25 :: quick release puller
- 26 :: axial bolt
- 27 :: spring
- 30 :: connector
- 30' :: Flat belt
- 40 :: clamping pliers.

### DETAILED DESCRIPTION OF THE PREFERRED EMBODIMENTS

The structural composition, technical means, and effectiveness achieved of the present invention is further described with embodiments together with illustrations as shown below:

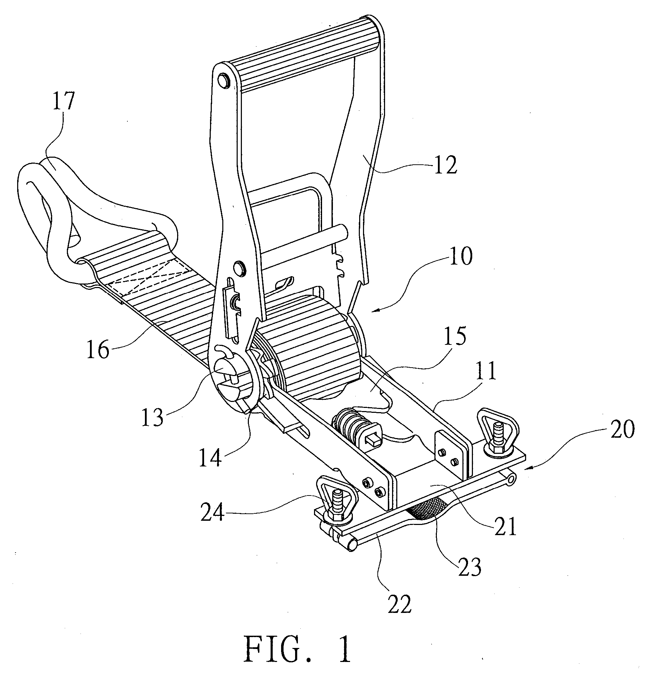

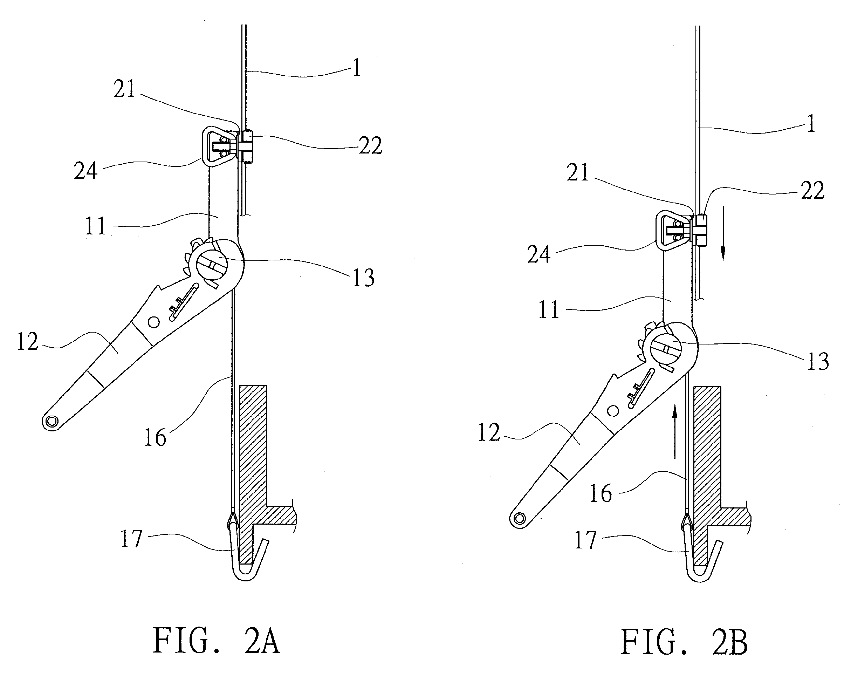

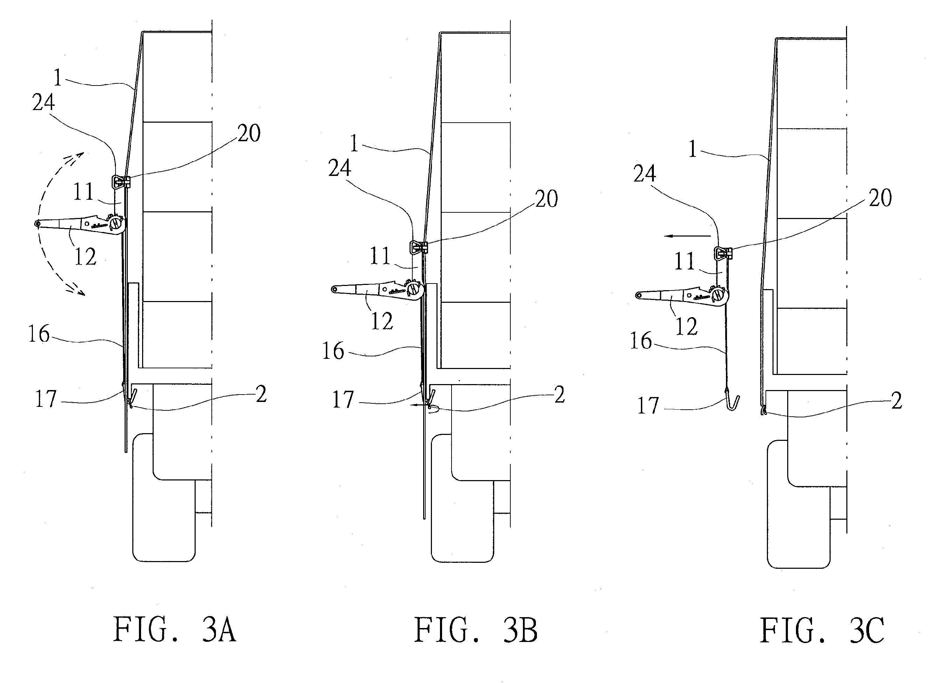

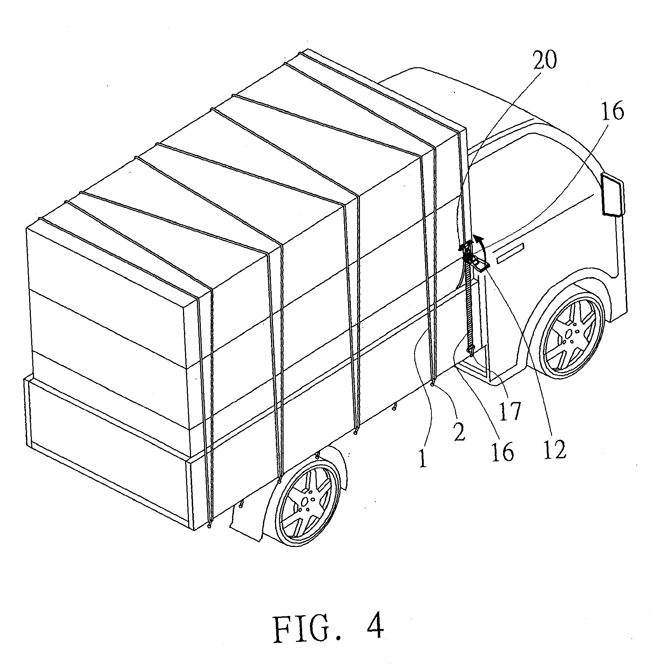

Please refer to the structural illustrations in Fig. 1, 2A, and 2B, the operational illustrations in Fig. 3A through 3C, and the implementing illustration in Fig. 4, that show a preferred embodiment of the present invention. In the structural design of the hand-winder 10 it mainly consists of a main body 11 and a pulling handle 12, both passes through a hub 13 to pivot axially to connect with a body, and to fix a pair of ratchets 14 onto the hub 13 and rotate together with the hub 13, to restrain the ratchet 14 through a sprawling element 15 to undergo only unidirectional rotation, and to wind a flat belt 16 through the hub 13, and further to enable the hub 13 to undergo unidirectional rotation while at the same time to retrieve the flat belt 16 through the up and down rotation of the pulling handle 12, and the end of the flat belt 16 is connected with a hook 17, and to assist the tightening performance of a rope 1 in fastening the cargo, this invention is connected to a clamping device 20 on the other corresponding end of the winding direction of the flat belt 16 on the main body 11 of the hand-winder 10, wherein the clamping device 20 is consisting of a fixed plate 21 and a movable plate 22. The fixed plate 21 and the movable plate 22 use single side pivot axial connection, and in the section between the two a holding section 23 is installed, the inner edge of the holding section 23 is installed with a gripping structure of patterns or granules so that when the movable plate 22 is opened to expand the fixed plate 21 and the movable end of rope 1 for fastening cargo is inserted into the holding section 23 between fixed plate 21 and movable plate 22 while at the same time the movable plate 22 closes in to the fixed plate 21 for clamping, and the tight holding of the clamping device 20 to the rope 1 is adjusted through the packing bolt 24 or the packed interlocking of the quick release puller to connect the hand-winder 10 to the movable end of the attached rope 1. Now, the flat belt 16 and hook 17 of the hand-winder 10 is matched and hooked to the side of the frame of the truck, and the pull handle 12 of the hand-winder 10 is operated to control the hub 13 to retrieve the flat belt 16 so that the retrieval of flat belt 16 forms tight pulling action to the corresponding rope 1. After the rope 1 is wound onto the hook bar 2 on the truck frame and thrown to the other side of the cargo, the clamping device 20 is loosen and taken down to remove the hand-winder 20 to the other side for repetition of actions stated above, so that during the process of fastening cargo using the rope 1, the hand-winder 10 of the present invention is used to assist in the fastening clamp to achieve the fastening operation with just the end of the binding rope 1 left to place the single set of hand-winder 10, to effectively relieve the labor resulted from the tight pulling method of traditional human labor and the safety problem, and furthermore only a single set of hand-winder 10 is required during the whole fastening process. Moreover the cost problem, brought with using several sets of hand-winder 10, is freed and the trouble and inconvenience of subsequent belt retrieval is solved; excellent convenience in use and simpleness in operation is achieved. Further, it brings forth a drastical reduction of the use of many hand-winders 10 and the installation cost problem;

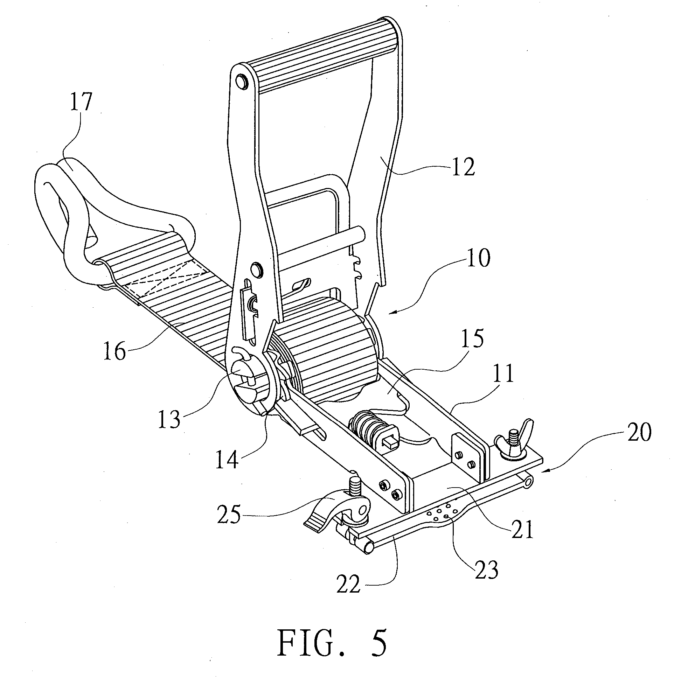

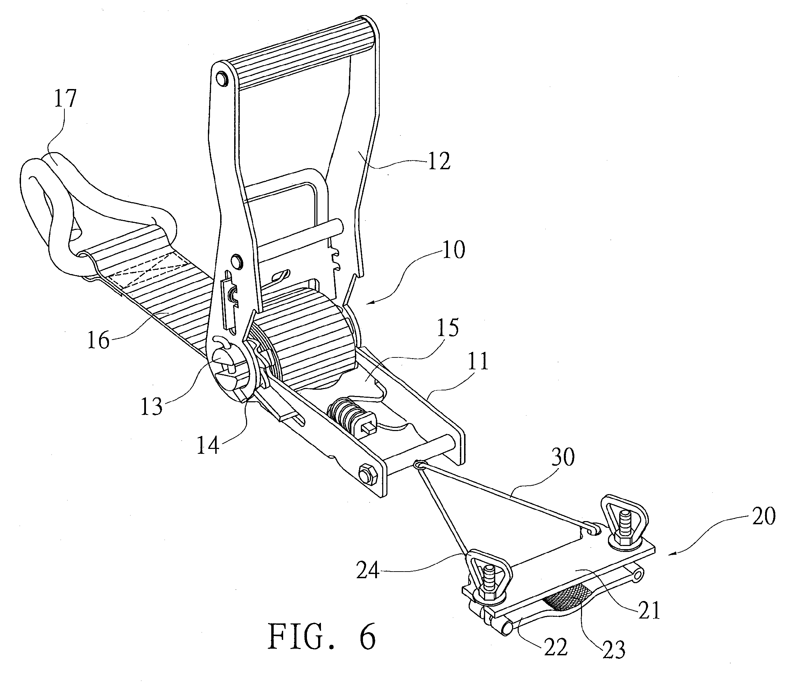

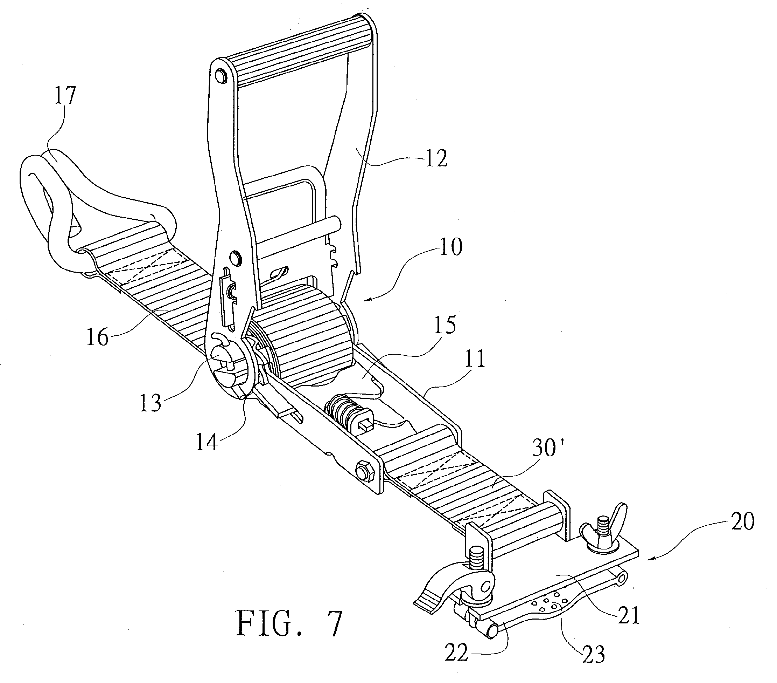

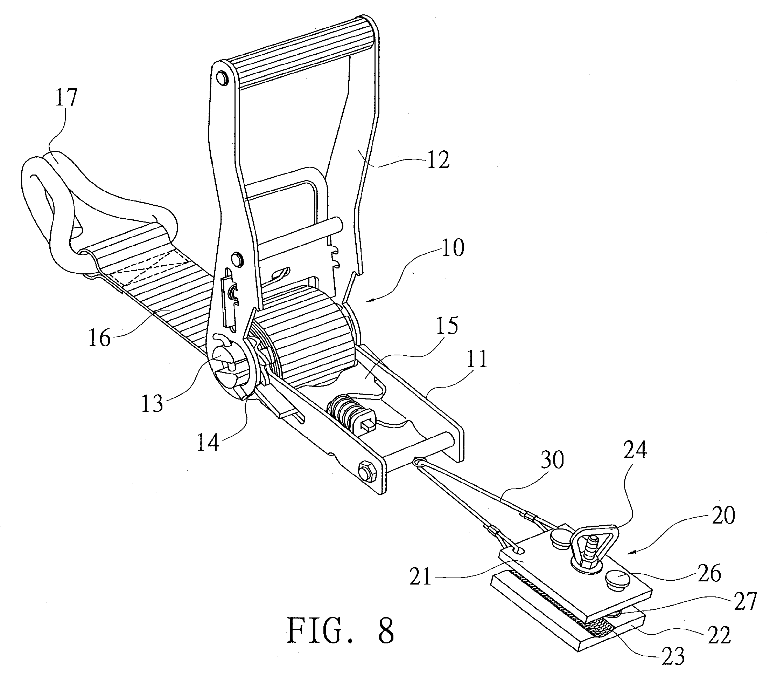

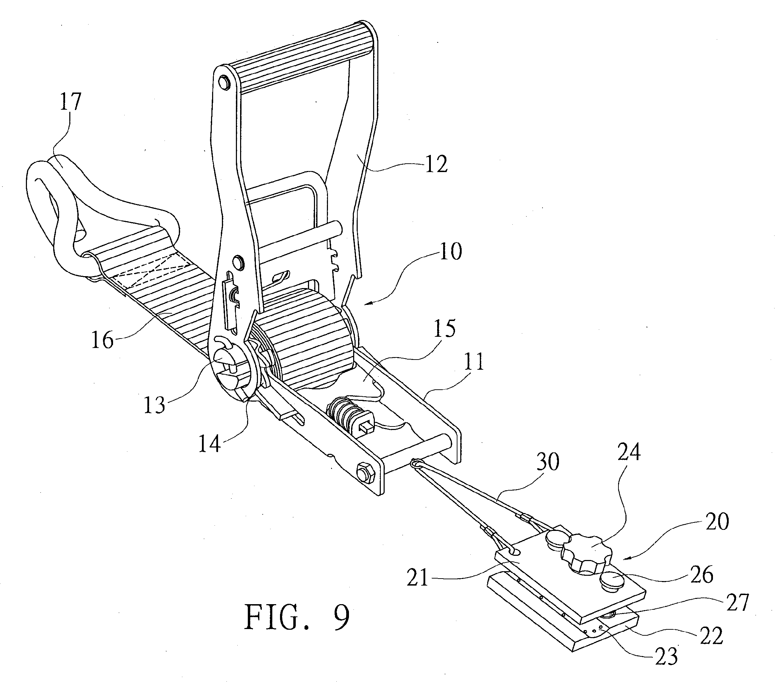

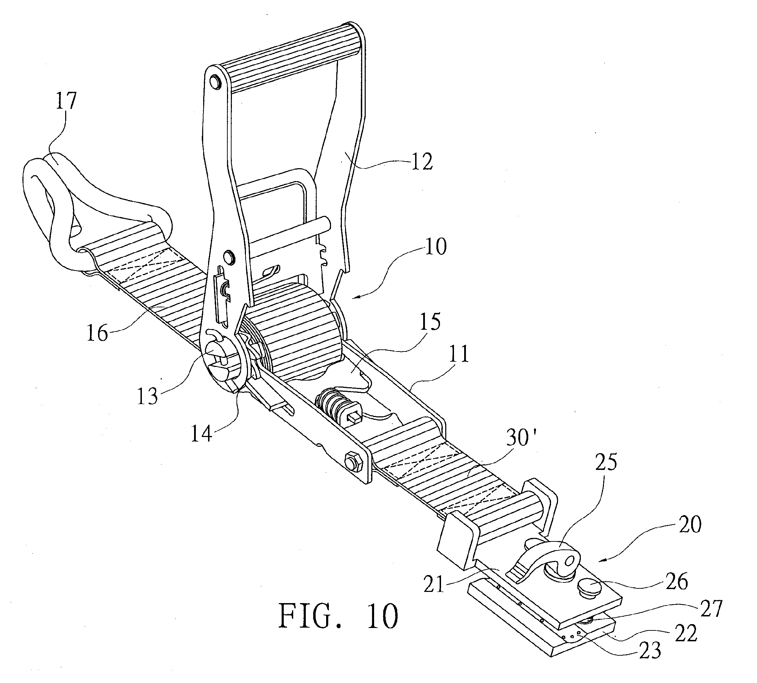

Please refer to Fig. 5 through 10, which show different types of preferred embodiments of the present invention. As shown in the illustrations, we know that they are designed by connecting the clamping device 20 and the hand-winder 10 in different ways, wherein Fig. 5 shows the clamping device 20 which is directly fixed onto one end of the main body 11 of the hand-winder 10, and the clamping devices 20 in Fig. 6 through Fig. 10 are connected to one end of the main body 11 of the hand-winder 10 hooked through a V-shape connector 30 or a flat belt 30', and the method of packed interlocking for the fixed plate 21 and the movable plate 22 of the clamping device 20, except for the packing bolt 24 method shown in Fig. 1 and Fig. 6, the quick release puller 25 method shown in Fig. 5 and Fig. 7 is also used to accomplish, and the holding method of clamping device 20 to the rope 1, except for the lateral clamping style shown in Fig. 1, and Fig. 5 through Fig. 7, the vertical clamping style shown in Fig. 8 through Fig. 10 and through the insertion of the spring 27 installed on axial bolt 26 between the fixed plate 21 and the movable plate 22 it is providing the automatic expansion effect after loosening different types of packing bolts 24 or quick release puller 25 in order to facilitate the insertion of the rope 1 into the holding section 23 between the two in order to accomplish the effect of clamping device 20 clamped at the movable end of the rope 1, so as to accomplish the purpose of fastening the rope 1 using the pulling operation using the hand-winder 10. In other words, disregarding the style of the clamping device 20 or the difference in the connecting method for the clamping device 20 and the hand-winder 10, it is hung on the rope 1 through the holding of the clamping device 20 to the rope 1 and further to accomplish the pulling control of the hand-winder 10 to achieve the expected purpose of packing rope 1 and to provide an easy to operate and practical rope 1 fastening assistant equipment;

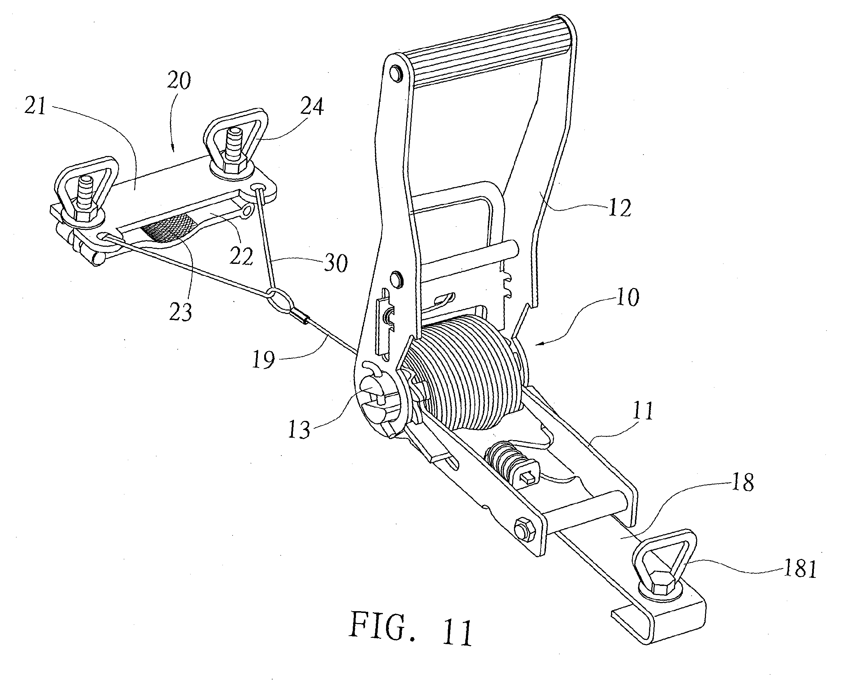

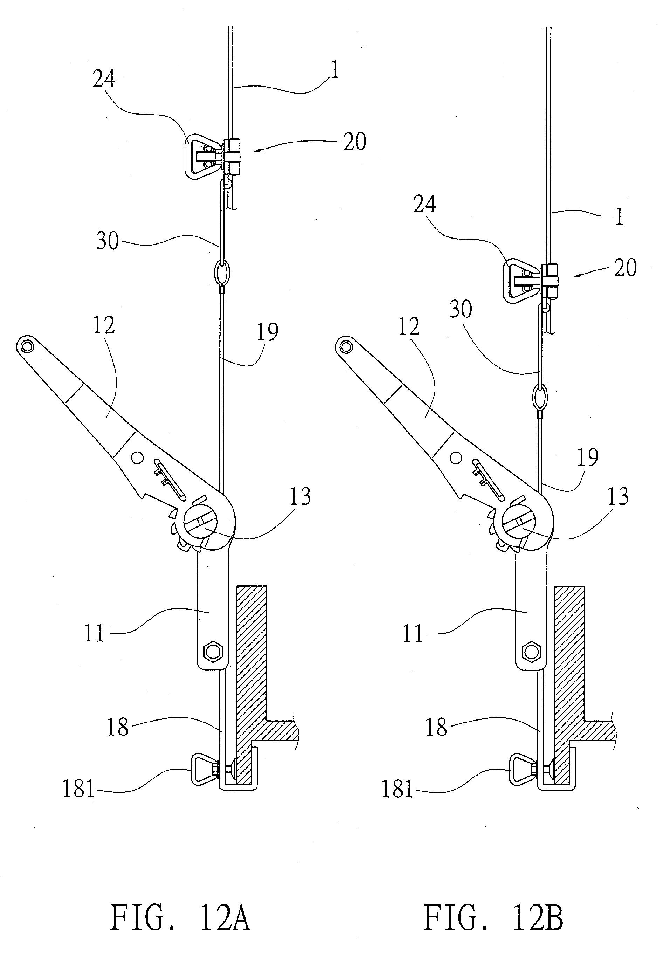

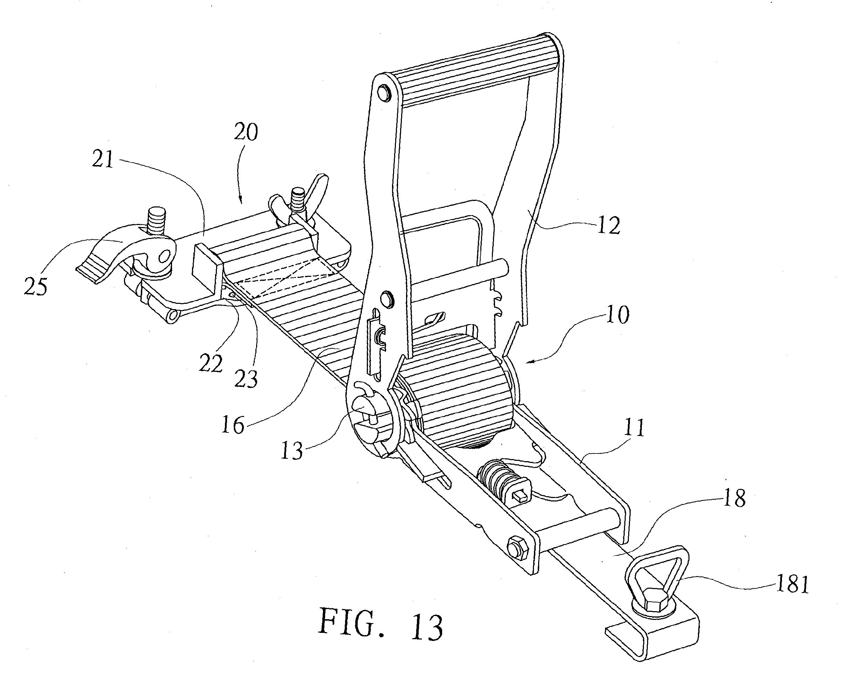

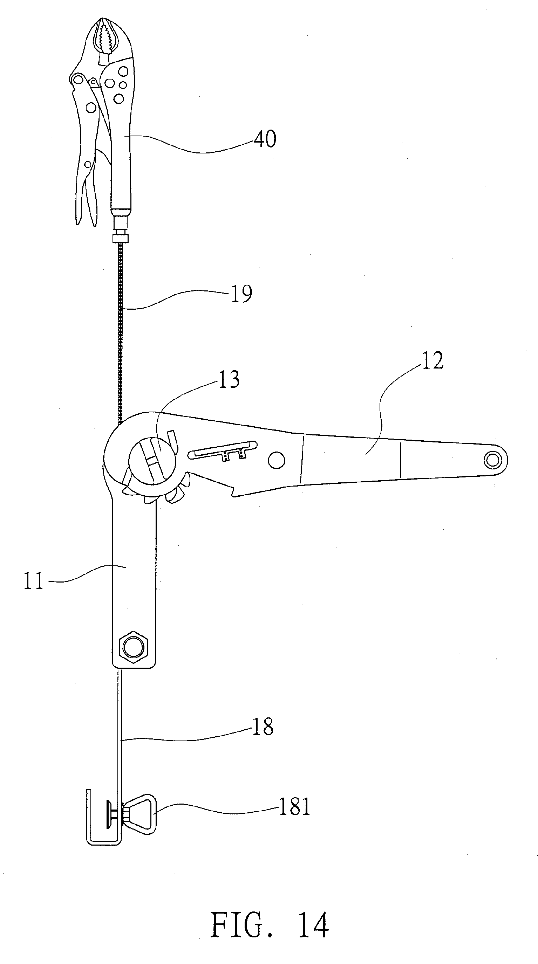

In addition, please refer to the structural illustration in Fig.11, operational illustrations in Fig. 12A and 12B, and structural illustrations in Fig. 13 and Fig. 14, wherein the preferred embodiment of different types of the present invention are shown. As illustrated, one end of the main body 11 of the hand-winder 10 is extendedly installed with a catch 18 for holding at the side of the truck frame, and maintain its hooking state through pressing of packing bolt 181 while at the same time the flat belt winding is used for the hub 13 to change rope 19, and the V-shape connector 30 at the end of the rope 19 is used to hook the clamping device 20 (shown in Fig.11) or a clamping pliers 40 (shown in Fig. 14), or in continuation an original flat belt 16 of the hand-winder 10 is used and connected with the clamping device 20 directly at the end of the flat belt 16 (shown in Fig. 13), and furthermore the clamping device 20 is using the embodiment revealed above in presenting different types of installations according the holding section 23 of the fixed plate 21 and movable plate 22 corresponding to the rope 1 for fastening cargo to form the holding, and to secure fixed clamping action through packing bolt 24 or quick release puller 25 such that when controlling the pulling handle 12 of the hand-winder 10 in rewinding the rope 19 the direct pulling of the rope 1 through the clamping device 20 is used. After the rope 1 is wound and tied to the hook rod 2 of the cargo frame and thrown over to the other side of the cargo, the clamping device 20 is released and the hand-winder 10 is taken down to the other side for the repetition of the above stated action in order to accomplish the cargo fastening operation smoothly, which constitutes another type of preferred embodiment of the present invention;

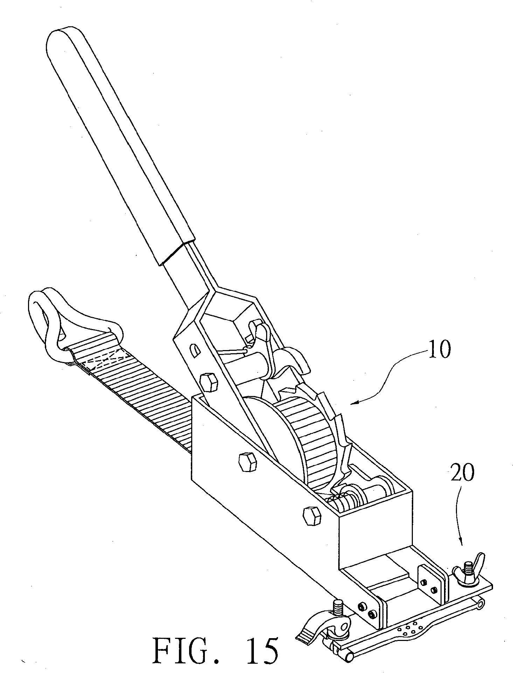

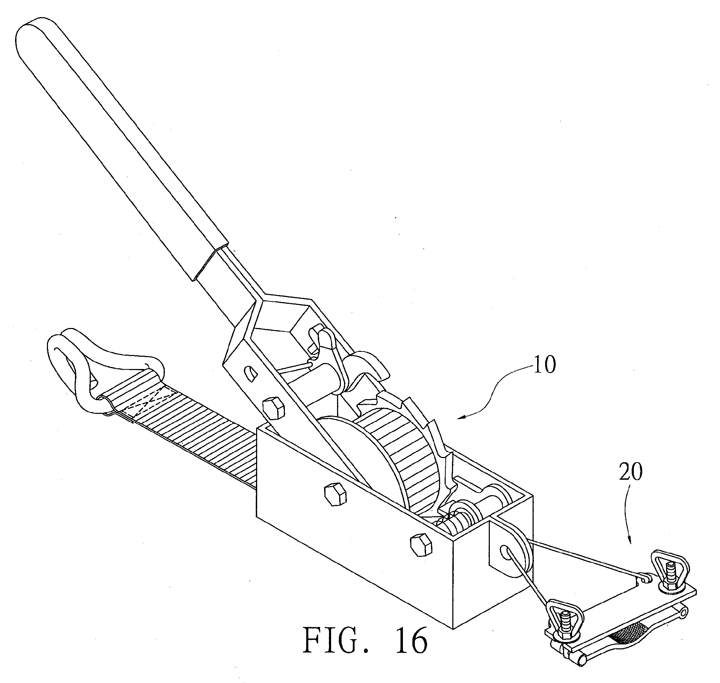

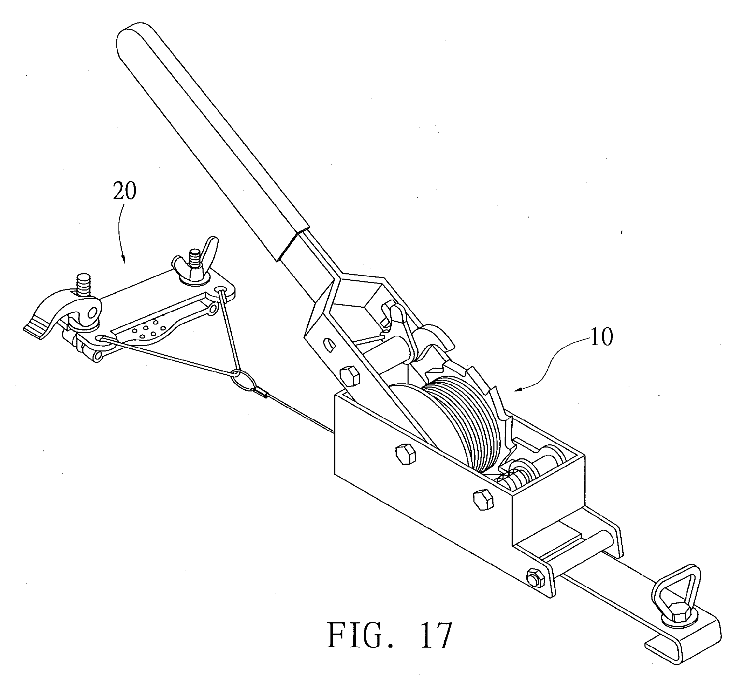

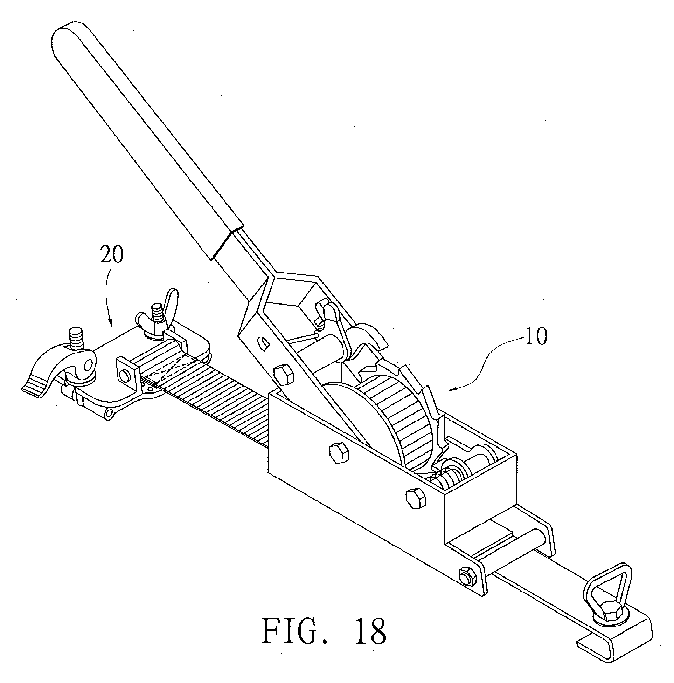

Please refer to the structural illustrations of Fig. 15 through Fig.18, wherein the feasible embodiments of other types of hand-winders of the present invention are shown. As illustrated, the hand-winder has a main body with a grooved frame, and its pulling handle is wound with flat belt, and on the added connection of its clamping device 20, in addition to attach the clamping device directly to one end of the main body of the hand-winder 10, or to attach clamping device 20 directly using V-shape connector to one end of the main body of the hand-winder 10, or to extendedly install a hook at one end of the main body of the hand-winder 10 and attach the hand-winder to the end section of the flat belt so as to achieve the same purpose of assisting pulling and fastening of rope using the hand-winder 10 and clamping device 20;

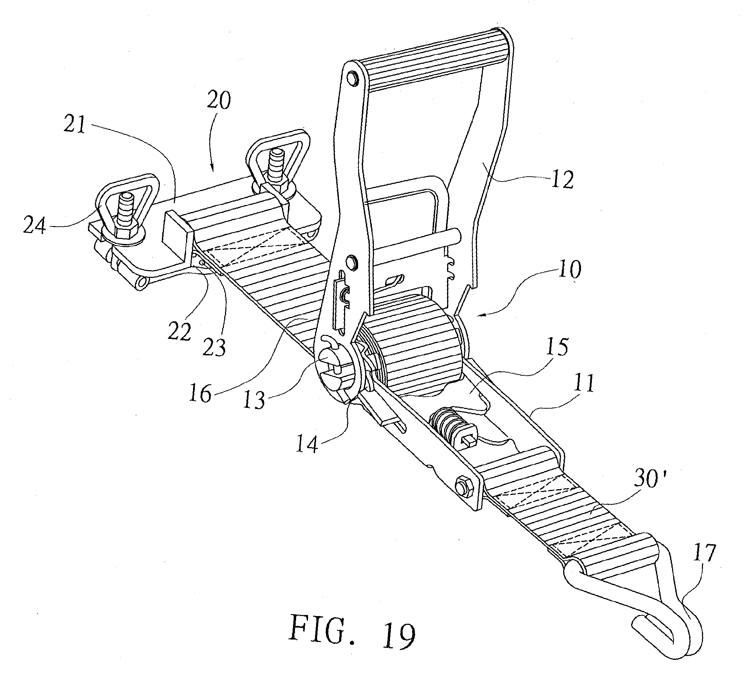

Please refer to the structural illustration in Fig. 19, which shows another type of clamping device of the preferred embodiment of the present invention. The structure is consisting of a hand-winder 10 with a clamping device 20 integrated on the hand-winder 10, wherein the hand-winder 10 is formed by pivoting a main body 11 and a pulling handle 12, the two sides of the hub 13 are pivoted with a pair of ratchets 14, the upper section of the ratchet 14 is installed with a sprawling element 15 corresponding to the ratchet 14, the sprawl element 15 is installed above the main body 11 and the sprawling element 15 is used to restrain the ratchet 14 and the hub 13 to undergo only unidirectional rotation, a flat belt 16 is wound through the hub 13, and the end of the flat belt 16 is connected to a clamping device 20. The hook 17 is attached to the main body 11 of the hand-winder at the other end corresponding to the winding direction of the flat belt 30'. The clamping device 20 consists of a fixed plate 21 and a movable plate 22, and a holding section 23 is installed between the two, wherein the inner edge of the holding section is installed with a gripping structure.

Hence, through the above description the present invention integrates an added clamping device to the existing hand-winder at the suitable position so as to use the clamping device to form tight clamping to the rope for fastening the cargo, with the hooking of hand-winder installed at the side of the truck frame, further to operate the retrieval of hand-winder to achieve the purpose of pulling rope tight so that during the process of the whole cargo fastening operation only the assistance of one set of hand-winder is needed to accomplish the pulling and tightening of rope smoothly for replacing traditional labor pulling and tightening method, which avoids the waste of labor and the possible safety problem while at the same time a lower quantity of hand-winder is used and excessive installation cost and subsequent problem of flat belt retrieval are prevented. As a while, the solution indeed has excellent industrial utilization and practical value.

In addition, except the style of embodiment revealed above, the auxiliary rope fastening clamping device structure of the hand-winder of the present invention can all be applied to all kinds of hand-winder within the technical range of the present invention and achieve the anticipated rope fastening assistance function, which is specially described.

In summary, the auxiliary rope fastening and clamping device structure for the hand-winder of the present invention, through the composite structural design, is for use in assisting the hand-winder and clamping device to accomplish the pulling and tightening operation and effectively resolve the labor generated in pulling and tightening method using labor and safety problem while at the same time the use of several hand-winders for fastening and the trouble of subsequent retrieval of flat belt are reduced. As a whole, this invention is indeed a rope assistant instrument that is easy to operate and of practical use, which is quite a superior and outstanding innovative design, hence the application of patent.

## Claims

1. A hand-winder assisting rope clamp structure comprising a hand-winder operable for retrieval of flat belt and a clamping device connected to one end of the hand-winder.

2. A hand-winder assisting rope clamp structure comprising a hand-winder and a clamping device integrated to the hand-winder, wherein the hand-winder is consisting of a main body and a pivoted pulling handle; with a pair of ratchets inserted on both sides of the pivoting hub; the upper section of the ratchet is installed with a sprawling element corresponding to the ratchet; the sprawling element is installed on the main body, and the sprawling element is used to restrain the ratchet and hub to undergo unidirectional rotation; a flat belt passes through the hub and is connecting at the end of the flat belt a hook; the clamping device is attached and connected to the other end of the flat belt passing through the main body of the hand-winder, and the clamping device is consisting of a fixed plate and a movable plate, and a holding section is installed between the two, with the inner edge of the holding section installed with a gripping structure.

3. The hand-winder assisting rope clamp structure as claimed in claim 2, wherein the stated clamping device is fixed directly to one end of the main body of the hand-winder.

4. The hand-winder assisting rope clamp structure as claimed in claim 2, wherein the stated clamping device is hooked and connected to the hand-winder through the V-shape connector at one end of the rope passing through the hub of the hand-winder.

5. The hand-winder assisting rope clamp structure as claimed in claim 2, wherein the stated clamping device is contained in and connected to the hand-winder through one end of the rope connecting to the main body of the hand-winder;

6. The hand-winder assisting rope clamp structure as claimed in claim 2, wherein the stated clamping device comprises the fixed plate and movable plate pivoted by the single side axis, and both ends of the two sides of the fixed plate and the movable plate are installed with packing bolts.

7. The hand-winder assisting rope clamp structure as claimed in claim 2, wherein the stated clamping device comprises the fixed plate and movable plate pivoted by the single side axis, and both ends of the two sides of the fixed plate and the movable plate are installed with packing bolts an quick release puller where the expansion of the quick release puller is for maintaining the tight holding state of the clamping device to the rope.

8. The hand-winder assisting rope clamp structure as claimed in claim 2, wherein the stated clamping device comprises the fixed plate and movable plate pivoted by the single side axis, wherein between the movable plate and the fixed plate an axial bolt is installed with a spring.

9. The hand-winder assisting rope clamp structure as claimed in claim 2, wherein the stated clamping device is a pair of clamping pliers.

10. A hand-winder assisting rope clamp structure as claimed in claim 2 mainly, consisting of a hand-winder and a clamping device integrated to the hand-winder, wherein the hand-winder comprises a main body pivoted to a pulling handle, a pair of ratchets are installed on both sides of the pivoted hub, the upper section of the ratchet is installed with a sprawling element corresponding to the ratchet, the sprawling element is installed on the main body, and a sprawling element is used to restrain the ratchet and hub to undergo only unidirectional rotation, the hub is inserted and wounds a flat belt wherein the end of the flat belt is connected to a clamping device; the hook is connected to the other end of the flat belt ,wound through the hub and wound in the same direction corresponding to the main body of the hand-winder.

11. A hand-winder assisting rope clamp structure comprising a hand-winder and a clamping device integrated to the hand-winder, wherein the hand-winder is consisting of a main body and a pivoted pulling handle, a pair of ratchets are installed on both sides of the pivoted hub, the upper section of the ratchet is installed with a sprawling element corresponding to the ratchet, the sprawling element is installed on the main body, and a sprawling element is used to restrain the ratchet and hub to undergo only unidirectional rotation, the hub is inserted and wounds a rope and the other end of the main body is extendedly installed with a hook; the clamping device is connected to the end of the rope attached to the hub of the hand-winder so that the rope is pulled with the winding of hand-winder, the clamping device comprises a fixed plate and a movable plate, and between the two a holding section is installed correspondingly, the inner edge of the holding section is installed with a gripping structure.

12. The hand-winder assisting rope clamp structure as claimed in claim 11, wherein the stated clamping device is hooked and connected to the hand-winder through the V-shape connector at one end of the rope wound through the hub of the hand-winder;

13. The hand-winder assisting rope clamp structure as claimed in claim 11, wherein the stated clamping device comprises of a fixed plate and a movable plate pivoted by the single sided hub, maintaining the tight fastening state of the clamping device to the rope through the interlocking packing bolt.

14. The hand-winder assisting rope clamp structure as claimed in claim 11, wherein the stated clamping device comprises a fixed plate and a movable plate pivoted by the single sided hub, maintaining the tight fastening state of the clamping device to the rope through the expansion of the quick release puller.

15. The hand-winder assisting rope clamp structure as claimed in claim 11, wherein the stated clamping device comprises a fixed plate and a movable plate pivoted by the single sided hub, the spring inserted between the two is used to realize the automatic expansion to facilitate the insertion of the rope for holding.
